# EUROPÄISCHE PATENTANMELDUNG

(11) **EP 1 312 892 A1**
(43) Veröffentlichungstag der Anmeldung: **21.05.2003**
(21) Anmeldenummer: 01127609.4
(22) Anmeldetag: 20.11.2001
(51) Int. Cl.: G01C 11/02, G03B 37/04

(54) **Detektoranordnung zur Aufnahme eines Bildstreifens mit mehreren Detektoren**

(71) Anmelder: Teuchert, Wolf D., Dr., 89551 Königsbronn (DE)
(72) Erfinder: Teuchert, Wolf D., Dr., 89551 Königsbronn (DE)
(74) Vertreter: KOHLER SCHMID + PARTNER

(57) **Zusammenfassung**

Bei einer Detektoranordnung (1) zur Aufnahme eines Bildstreifens, die mehrere Detektoren (7, 9) mit jeweils einer elektrooptischen Aufnahmefläche (6, 8) umfaßt, sind erfindungsgemäß die Detektoren (7, 9) in mindestens zwei Detektorstreifen (3, 4), die sich in gleicher Richtung (5) erstrecken und in unterschiedlichen Winkeln zur Einfallsrichtung (2) des auf die Detektoranordnung (1) fallenden Bildstreifens ausgerichtet sind, angeordnet und die Aufnahmeflächen (6, 8) der Detektoren (7, 9) jedes Detektorstreifens (3, 4) voneinander in der Richtung (5) der Detektorstreifen (3, 4) beabstandet. Dabei erstreckt sich in der Richtung (5) der Detektorstreifen (3, 4) jede Aufnahmefläche (6, 8) eines Detektorstreifens (3, 4) bis mindestens an eine Aufnahmefläche (6, 8) eines anderen Detektorstreifens (3, 4) und ist bei schräg oder parallel zur Einfallsrichtung (2) des Bildstreifens ausgerichteten Aufnahmeflächen (6) jeweils ein Spiegel (11) im Strahlengang vor diesen Aufnahmeflächen (6) angeordnet. Der einfallende Bildstreifen wird in Richtung der Detektorstreifen optisch dicht in Teilbilder zerlegt, die abwechselnd auf die Aufnahmeflächen der beiden Detektorstreifen abgebildet werden.

## Beschreibung

Die Erfindung betrifft eine Detektoranordnung zur Aufnahme eines Bildstreifens, umfassend mehrere Detektoren mit jeweils einer elektrooptischen Aufnahmefläche, sowie eine Kamera mit mindestens einer solchen Detektoranordnung und ein Verfahren zur Bildwanderungskompensation für eine solche Kamera.

Eine derartige Detektoranordnung ist beispielsweise durch die WO 00/66976 bekanntgeworden.

Bei bekannten Detektoren, z.B. CCD-Detektoren, ist der Füllfaktor, also das Verhältnis von elektrooptischer Aufnahmefläche zur Gesamtfläche des Detektors, stets kleiner als 100%, so daß einzelne Detektoren nicht optisch lückenlos zur Ausbildung einer größeren elektrooptischen Aufnahmefläche aneinandergereiht werden können.

Die aus der WO 00/66976 bekannte Detektoranordnung wird für Luftbildaufnahmen in einem Fluggerät eingesetzt und weist mehrere Detektoren auf, deren elektrooptische Aufnahmeflächen voneinander jeweils beabstandet sind. Dabei deckt, gesehen in Flugrichtung der Detektoranordnung, mindestens eine Aufnahmefläche die Lücke zwischen zwei in Querrichtung beabstandeten, benachbarten Aufnahmeflächen zumindest teilweise ab. Jeder auf die Detektoranordnung vollflächig abgebildete Bildstreifen wird von den Aufnahmeflächen jeweils nur lükkenhaft als Einzelbild elektrooptisch aufgenommen und digital gespeichert. Da sich in Flugrichtung versetzte Aufnahmeflächen, gesehen in Flugrichtung, zumindest teilweise überdecken, können mehrere zu verschiedenen Zeitpunkten aufgenommene, lückenhafte Einzelbilder anhand übereinstimmender Bildausschnitte zueinander ausgerichtet und zu einem digitalen Gesamtbild des überflogenen Bildstreifens überlagert werden. Bei der bekannten Detektoranordnung ist bei unbewegter Detektoranordnung die vollfläche Aufnahme eines Bildstreifens nicht möglich.

Es ist demgegenüber die Aufgabe der Erfindung, eine Detektoranordnung der eingangs genannten Art derart weiterzubilden, daß mit Detektoren mit einem Füllfaktor kleiner als 100% eine größere elektrooptische Aufnahmefläche optisch lückenlos ausgebildet werden kann, sowie eine entsprechende Kamera dafür bereitzustellen.

Diese Aufgabe wird erfindungsgemäß dadurch gelöst, daß die Detektoren in mindestens zwei Detektorstreifen, die sich in gleicher Richtung erstrecken und in unterschiedlichen Winkeln zur Einfallsrichtung des auf die Detektoranordnung fallenden Bildstreifens ausgerichtet sind, angeordnet und die Aufnahmeflächen der Detektoren jedes Detektorstreifens voneinander in der Richtung der Detektorstreifen beabstandet sind, daß sich in der Richtung der Detektorstreifen jede Aufnahmefläche eines Detektorstreifens bis mindestens an eine Aufnahmefläche eines anderen Detektorstreifens erstreckt und daß bei schräg oder parallel zur Einfallsrichtung des Bildstreifens ausgerichteten Aufnahmeflächen jeweils ein Spiegel im Strahlengang vor diesen Aufnahmeflächen angeordnet ist.

Der wesentliche Vorteil der erfindungsgemäßen Detektoranordnung besteht darin, daß der einfallende Bildstreifen in Richtung der Detektorstreifen optisch dicht in Teilbilder zerlegt wird, die abwechselnd auf die Aufnahmeflächen der Detektorstreifen abgebildet werden. Dies ermöglicht es, zusammenhängende Bildstreifen, Bildstreifengruppen oder sogar ganze Bildfelder auf einmal aufzunehmen, wodurch sich die Software zur Bildfusion der Einzelbilder und eines Bildblokkes aus vielen Einzelbildern erheblich vereinfacht. Außerdem kann der Datendurchsatz durch den hoch parallelen Aufbau der mehreren Detektoren erheblich ausgeweitet werden, wodurch die Bildfolge erheblich gesteigert wird und auch eine Betrachtung der Bilder simultan zur Aufnahme (d.h. Sucherfunktion) möglich ist.

Vorzugsweise überlappt in der Richtung der Detektorstreifen jede Aufnahmefläche eines Detektorstreifens mit einer Aufnahmefläche eines anderen Detektorstreifens. Anhand dieser Bildüberlappung benachbarter Teilbilder läßt sich ein glatter Bild- und Helligkeitsübergang von einem Teilbild zum nächsten leichter herstellen.

In einer bevorzugten Ausführungsform der Erfindung sind die Detektoren in zwei Detektorstreifen angeordnet und die Aufnahmeflächen des einen Detektorstreifens etwa rechtwinklig und die Aufnahmeflächen des anderen Detektorstreifens etwa parallel zur Einfallsrichtung des Bildstreifens ausgerichtet. Diese Anordnung der Detektoren ist für Detektoren möglich, deren Aufnahmefläche in Richtung der Detektorstreifen jeweils größer als die halbe Detektorbreite ist.

Bei einer vorteilhaften Weiterbildung dieser Ausführungsform ist im Strahlengang vor den Aufnahmeflächen ein schräg zur Einfallsrichtung des Bildstreifens ausgerichteter Träger angeordnet, der in Richtung der Detektorstreifen abwechselnd Spiegelflächen und transparente Flächen für den einfallenden Bildstreifen aufweist, wobei die Spiegelflächen vor den parallel oder schräg zur Einfallsrichtung des Bildstreifens ausgerichteten Aufnahmeflächen und die transparenten Flächen vor den etwa rechtwinklig zur Einfallsrichtung ausgerichteten Aufnahmeflächen angeordnet sind. Bei anderen Weiterbildungen sind die Spiegel einzelne Spiegel, die im Strahlengang vor den entsprechenden Aufnahmeflächen angeordnet sind. In beiden Fällen wird der einfallende Bildstreifen in Richtung der Detektorstreifen optisch dicht in Teilbilder zerlegt, die abwechselnd auf die Aufnahmeflächen der beiden Detektorstreifen abgebildet werden.

Bei einer anderen bevorzugten Ausführungsform der Erfindung ist auf zwei bezüglich des einfallenden Bildstreifens einander gegenüberliegenden Seiten jeweils ein Detektorstreifen mit schräg oder parallel zur Einfallsrichtung des Bildstreifens ausgerichteten Aufnahmeflächen angeordnet. Bei dieser Ausführungsform sind die Spiegel einzelne Spiegel, die im Strahlengang vor den entsprechenden Aufnahmeflächen angeordnet sind.

Vorzugsweise ist zwischen den beiden Detektorstreifen ein weiterer Detektorstreifen mit etwa rechtwinklig zur Einfallsrichtung des Bildstreifens ausgerichteten Aufnahmeflächen angeordnet, wobei bevorzugt in der Richtung der Detektorstreifen zwischen zwei Aufnahmeflächen eines Detektorstreifens jeweils eine Aufnahmefläche der beiden anderen Detektorstreifen angeordnet ist. Diese Anordnung der Detektoren in drei Detektorstreifen ist auch für Detektoren erforderlich, deren Aufnahmefläche in Richtung der Detektorstreifen jeweils kleiner als die Hälfte und größer als ein Drittel der Detektorbreite ist.

Die Erfindung betrifft auch eine Kamera mit mindestens einer Detektoranordnung, insbesondere mit mehreren Detektoranordnungen, wie sie oben beschrieben sind.

Zur Aufnahme großflächigerer Bilder wird bei bevorzugten Ausführungsformen der Kamera das einfallende Bild mittels eines bzw. mehrerer geometrischer Strahlteiler in mehrere Teilbildstreifen geteilt und jeweils auf eine Detektoranordnung abgebildet. Durch die erhebliche Steigerung des überdeckten Szenenbereichs der erfindungsgemäßen Detektoranordnung kann die Kamera insbesondere für Luftbildaufnahmen aus geringerer Höhe als bisher möglich eingesetzt werden. Wesentlich ist, daß auch hier das gesamte Bildfeld mit mehreren Teilaufnahmen abgedeckt wird.

Vorzugsweise ist der Strahlteiler als ein Spiegel mit mehreren aneinander angrenzenden Spiegelstreifen ausgebildet, die jeweils in unterschiedlichen Winkeln zur Einfallsrichtung des einfallenden Bildes ausgerichtet sind, wobei sich die einzelnen Detektorstreifen der Detektoranordnungen und die Spiegelstreifen in der gleichen Richtung erstrecken. Durch die optisch dichte Fusion der Teilbildstreifen wird der wesentliche Schritt von einem Aufnahmeverfahren mit mehreren Teilbildern zu einer Aufnahme in einem einzigen Schritt getan. Damit wird der gesamte Bereich der digitalen Photographie mit Bildformaten erschlossen, die quadratisch oder rechteckig oder streifenförmig sind.

Die Erfindung betrifft auch ein Verfahren zur Bildwanderungskompensation für eine Kamera, wie sie oben beschrieben ist. Erfindungsgemäß wird die Bildwanderungskompensation in jeder Aufnahmefläche der Detektoranordnungen elektronisch jeweils so gesteuert, daß sie im Mittel der lokalen Bildwanderung der jeweiligen Aufnahmefläche zumindest näherungsweise entspricht. Dieses Verfahren ermöglicht die Anwendung der erfindungsgemäßen Kamera auch auf Bildfelder, in denen die Bildwanderungsgeschwindigkeit nicht konstant ist. Insbesondere ist es durch das erfindungsgemäße Verfahren bei Luftbildaufnahmen möglich,
- den Abfall der Bildwanderungsgeschwindigkeit bei schräg blickenden Objektiven in Richtung Horizont quer zur Flugrichtung schrittweise approximativ zu kompensieren;
- die geringere Bildwanderungsgeschwindigkeit der Detektoranordnungen für die Stereosicht in Vorder- und Rückblick gegenüber Nadir in einem Sehfeld zu berücksichtigen;
- die abnehmende Bildwanderungsgeschwindigkeit im Sehfeld in der oder quer zur Flugrichtung gegenüber Nadir für große Bildfelder im Tiefflug zu kompensieren.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: eine erste Ausführungsform der erfindungsgemäßen Detektoranordnung in perspektivischer Ansicht;
- Fig. 2: die erste Ausführungsform der Detektoranordnung in Draufsicht;
- Fig. 3: die erste Ausführungsform der Detektoranordnung in Seitenansicht gemäß Pfeilrichtung III in Fig. 2;
- Fig. 4: eine zweite Ausführungsform der erfindungsgemäßen Detektoranordnung in perspektivischer Ansicht;
- Fig. 5: eine dritte Ausführungsform der erfindungsgemäßen Detektoranordnung in Draufsicht;
- Fig. 6: die dritte Ausführungsform der Detektoranordnung in Seitenansicht gemäß Pfeilrichtung VI in Fig. 5; und
- Fig. 7: eine erfindungsgemäße Kamera in Seitenansicht bei ausgelassener Vorderwand.

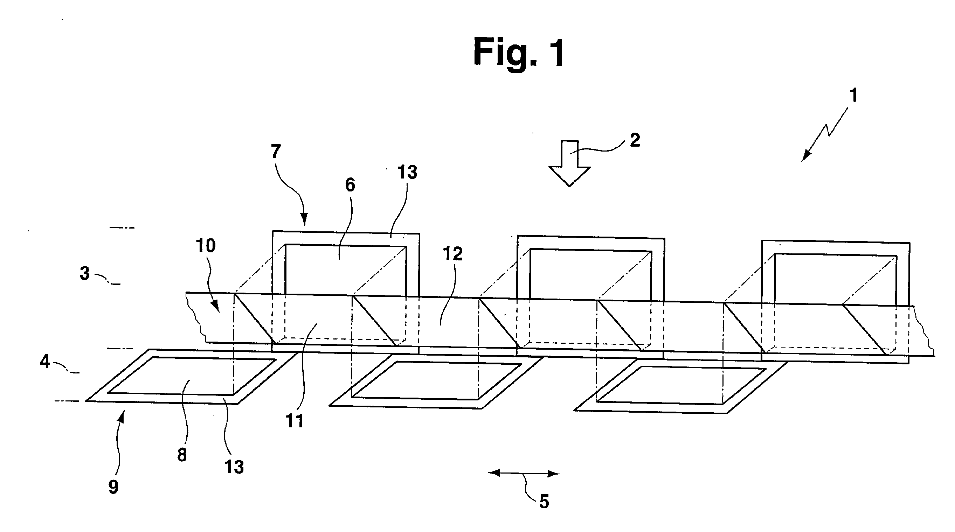

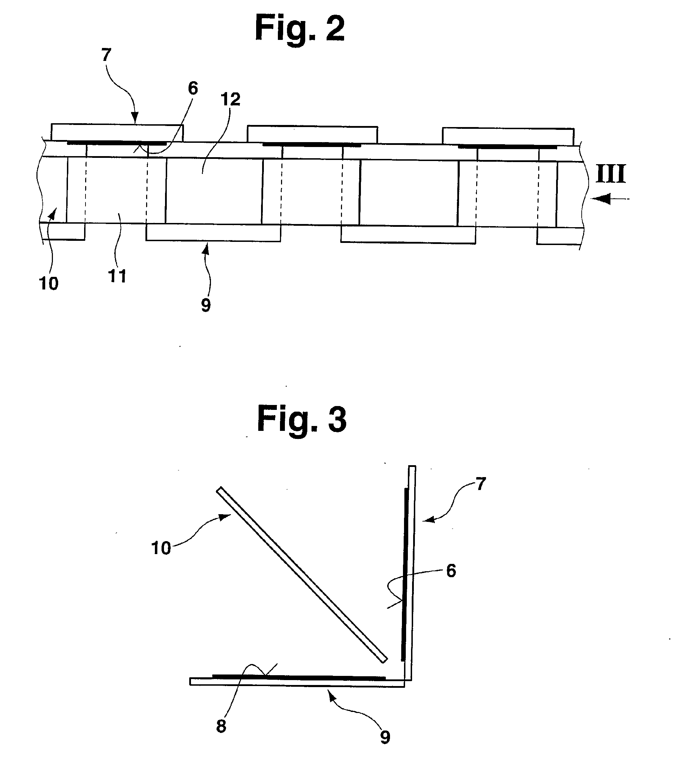

Die in den Fign. 1 bis 3 gezeigte Detektoranordnung **1** dient zur Aufnahme eines in Pfeilrichtung **2** einfallenden Bildstreifens (nicht gezeigt). Die einzelnen Detektoren der Detektoranordnung 1 sind in zwei Detektorstreifen **3** und **4** angeordnet, die sich beide in Richtung des Doppelpfeils **5** erstrecken. Im seitlich zum einfallenden Bildstreifen angeordneten Detektorstreifen 3 sind die elektrooptischen Aufnahmeflächen **6** der Detektoren **7** voneinander jeweils in Richtung 5 beabstandet und parallel zur Einfallsrichtung 2 des auf die Detektoranordnung 1 fallenden Bildstreifens ausgerichtet. Im Detektorstreifen 4 sind die elektrooptischen Aufnahmeflächen **8** der Detektoren **9** voneinander jeweils in Richtung 5 beabstandet und rechtwinklig zur Einfallsrichtung 2 ausgerichtet. Gesehen in Richtung 5, ist jeweils eine Aufnahmefläche des einen Detektorstreifens zwischen zwei Aufnahmeflächen des anderen Detektorstreifens angeordnet, wobei, gesehen in Richtung 5, jeweils zwei in Richtung 5 benachbarte Aufnahmeflächen 6, 8 beider Detektorstreifen 3, 4 aneinander angrenzen. Im Strahlengang vor den Aufnahmeflächen 6, 8 ist unter 45° zur Einfallsrichtung 2 ein Trägerstreifen (z.B. Glasstreifen) **10** angeordnet, der in Richtung 5 abwechselnd Spiegelflächen **11** und transparente Flächen **12** aufweist. Die Spiegelflächen 11 sind vor den Aufnahmeflächen 6 und die transparenten Flächen 12 vor den Aufnahmeflächen 8 angeordnet, so daß der einfallende Bildstreifen in Richtung 5 optisch dicht in Teilbilder zerlegt wird, die abwechselnd auf die Aufnahmeflächen 6 und 8 abgebildet werden. Vereinfacht kann mit einem halbdurchlässigen Spiegel gearbeitet werden. Die Aufnahmeflächen 6, 8 sind in der Bildebene des einfallenden Bildstreifens, d.h. in der Bildebene eines den Bildstreifen abbildenden Objektivs, angeordnet.

Durch die alternierende Anordnung der Detektoren 7, 9 in den beiden Detektorstreifen 3, 4 ist es trotz der die Aufnahmeflächen 6, 8 umgebenden Detektorrahmen **13**, also trotz eines Füllfaktors der Detektoren 7, 9 von kleiner als 100%, möglich, den einfallenden Bildstreifen optisch lückenlos auf die Aufnahmeflächen 6, 8 abzubilden und digital aufzunehmen. Die mit den Aufnahmeflächen 6, 8 aufgenommenen Teilbilder werden digital gespeichert und lassen sich später mit geeigneter Software lückenlos wieder zu dem ursprünglichen Bildstreifen zusammensetzen, wobei über bekannte Korrekturverfahren ein glatter Bild- und Helligkeitsübergang von einem Teilbild zum nächsten erreicht werden kann.

In nicht gezeigten anderen Ausführungsformen überlappen, gesehen in Richtung 5, zwei in Richtung 5 benachbarte Aufnahmeflächen 6, 8 beider Detektorstreifen 3, 4 jeweils miteinander. Anhand dieser Bildüberlappung benachbarter Teilbilder läßt sich der glatte Bild- und Helligkeitsübergang von einem Teilbild zum nächsten einfacher herstellen.

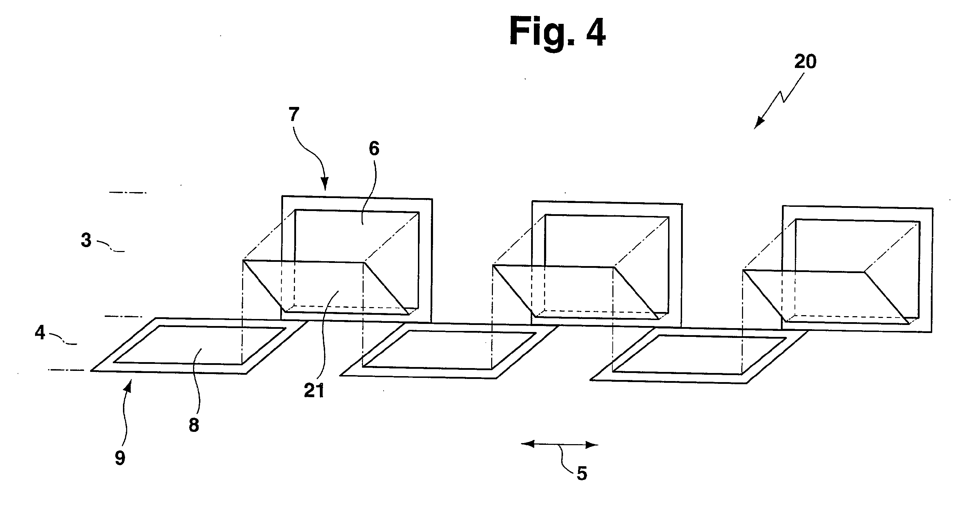

Anstelle eines durchgehenden Trägerstreifens sind bei der in **Fig. 4** gezeigten Detektoranordnung **20** einzelne Spiegel **21** im Strahlengang vor den Aufnahmeflächen 6 angeordnet, so daß der einfallenden Bildstreifen ebenfalls in Richtung 5 optisch dicht in Teilbilder zerlegt wird, die abwechselnd auf die Aufnahmeflächen 6 und 8 der Detektoren 7 bzw. 9 abgebildet werden.

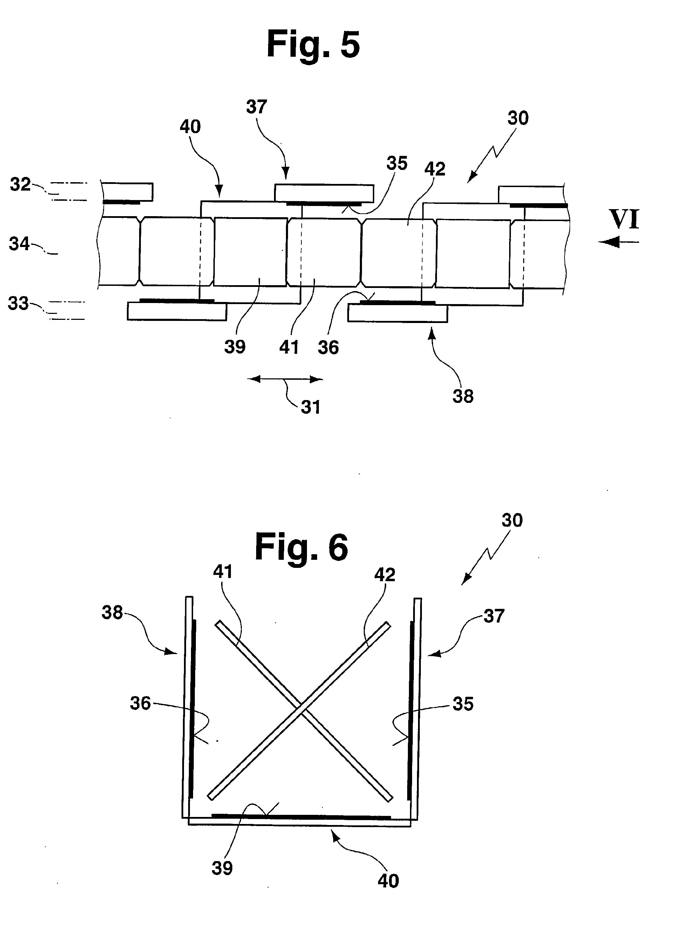

**Fig. 5** zeigt eine andere Detektoranordnung **30**, bei der die einzelnen Detektoren in drei sich in Richtung des Doppelpfeils **31** erstreckenden Detektorstreifen **32, 33, 34** angeordnet sind. In den seitlich zum einfallenden Bildstreifen angeordneten Detektorstreifen **32, 33** sind die Aufnahmeflächen **35** und **36** der Detektoren **37** bzw. **38** voneinander jeweils in Richtung 31 beabstandet und parallel zur Einfallsrichtung des auf die Detektoranordnung 30 fallenden Bildstreifens, d.h. rechtwinklig zur Zeichenebene der Fig. 5, ausgerichtet. Im Detektorstreifen 34 sind die Aufnahmeflächen **39** der Detektoren **40** voneinander jeweils in Richtung 31 beabstandet und rechtwinklig zur Einfallsrichtung des Bildstreifens, d.h. in der Zeichenebene der Fig. 5, ausgerichtet. Dabei ist, gesehen in Richtung 31, zwischen zwei Aufnahmeflächen einer Detektorreihe jeweils eine Aufnahmefläche der beiden anderen Detektorreihen angeordnet, wobei, gesehen in Richtung 31, jeweils zwei in Richtung 31 benachbarte Aufnahmeflächen zweier Detektorstreifen aneinander angrenzen.

Im Strahlengang vor den Aufnahmeflächen 35, 36 sind jeweils unter 45° (**Fig. 6**) zur Einfallsrichtung des Bildstreifens einzelne Spiegel **41, 42** angeordnet. Dadurch wird der einfallende Bildstreifen in Richtung 31 optisch dicht in Teilbilder zerlegt, die abwechselnd auf die Aufnahmeflächen 35, 36 und 39 abgebildet werden. Die Aufnahmeflächen 35, 36, 39 sind in der Bildebene des einfallenden Bildstreifens, d.h. in der Bildebene eines den Bildstreifen abbildenden Objektivs, angeordnet. Die mit den Aufnahmeflächen 35, 36, 39 aufgenommenen Teilbilder werden digital gespeichert und lassen sich später mit geeigneter Software lückenlos wieder zu dem ursprünglichen Bildstreifen zusammensetzen, wobei über bekannte Korrekturverfahren ein glatter Bild- und Helligkeitsübergang von einem Teilbild zum nächsten erreichbar ist.

In nicht gezeigten anderen Ausführungsformen überlappen, gesehen in Richtung 31, zwei in Richtung 31 benachbarte Aufnahmeflächen zweier Detektorstreifen jeweils miteinander.

Anhand dieser Bildüberlappung benachbarter Teilbilder läßt sich der glatte Bild- und Helligkeitsübergang von einem Teilbild zum nächsten einfacher herstellen.

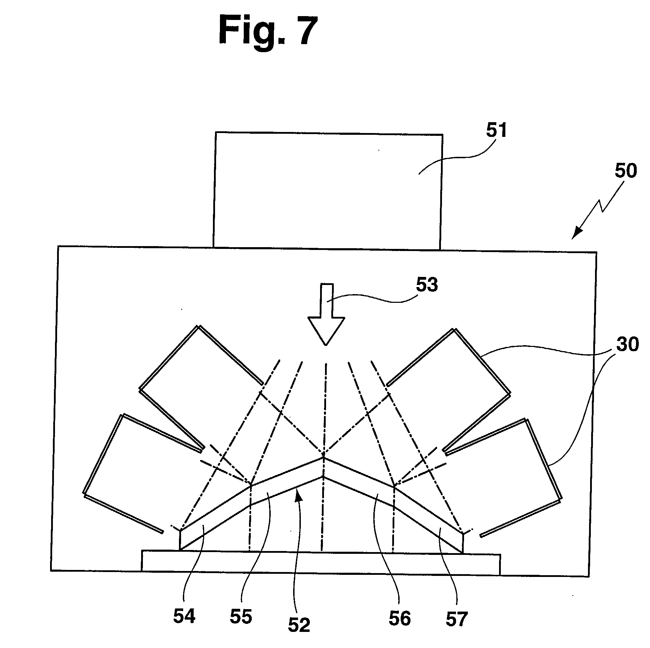

In **Fig. 7** ist eine Kamera **50** mit einem Objektiv **51** und einem geometrischen Strahlteiler **52** gezeigt. Das durch das Objektiv 51 einfallende Bild (Einfallsrichtung **53**) wird durch den Strahlteiler 52 als Teilbildstreifen auf vier Detektoranordnungen 30 aufgeteilt, deren elektrooptische Aufnahmeflächen in der Bildebene des Objektivs 51 liegen. Der Strahlteiler 52 ist durch einen Spiegel mit vier aneinander angrenzenden Spiegelstreifen (Facettenstreifen) **54, 55, 56, 57** gebildet, die jeweils in unterschiedlichen Winkeln zur Einfallsrichtung 53 des einfallenden Bildes ausgerichtet sind. Dabei erstrecken sich die einzelnen Detektorstreifen der Detektoranordnungen 30 und die Spiegelstreifen 54, 55, 56, 57 in zueinander parallelen Richtungen.

Bei einer solchen Kamera 50 kann die Bildwanderungskompensation in jeder einzelnen Aufnahmefläche der Detektoranordnungen 30 elektronisch individuell so eingestellt werden, daß sie im Mittel der lokalen Bildwanderung der jeweiligen Aufnahmefläche zumindest näherungsweise entspricht. Dieses Verfahren ist auch für andere Anzahlen von Detektorstreifen mit den entsprechend ausgebildeten reflektiven Strahlteilern geeignet.

## Patentansprüche

1. Detektoranordnung (1; 20; 30) zur Aufnahme eines Bildstreifens, umfassend mehrere Detektoren (7, 9; 37, 38, 40) mit jeweils einer elektrooptischen Aufnahmefläche (6, 8; 35, 36, 39),
**dadurch gekennzeichnet,**
**daß** die Detektoren (7, 9; 37, 38, 40) in mindestens zwei Detektorstreifen (3, 4; 32, 33, 34), die sich in gleicher Richtung (5; 31) erstrecken und in unterschiedlichen Winkeln zur Einfallsrichtung (2) des auf die Detektoranordnung (1; 20; 30) fallenden Bildstreifens ausgerichtet sind, angeordnet und die Aufnahmeflächen (6, 8; 35, 36, 39) der Detektoren (7, 9; 37, 38, 40) jedes Detektorstreifens (3, 4; 32, 33, 34) voneinander in der Richtung (5; 31) der Detektorstreifen (3, 4; 32, 33, 34) beabstandet sind, daß sich in der Richtung (5; 31) der Detektorstreifen (3, 4; 32, 33, 34) jede Aufnahmefläche (6, 8; 35, 36, 39) eines Detektorstreifens (3, 4; 32, 33, 34) bis mindestens an eine Aufnahmefläche (6, 8; 35, 36, 39) eines anderen Detektorstreifens (3, 4; 32, 33, 34) erstreckt und daß bei schräg oder parallel zur Einfallsrichtung (2) des Bildstreifens ausgerichteten Aufnahmeflächen (6; 35, 36) jeweils ein Spiegel (11; 41, 42) im Strahlengang vor diesen Aufnahmeflächen (6; 35, 36) angeordnet ist.

2. Detektoranordnung nach Anspruch 1, **dadurch gekennzeichnet, daß** in der Richtung (5; 31) der Detektorstreifen (3, 4; 32, 33, 34) jede Aufnahmefläche (6, 8; 35, 36, 39) eines Detektorstreifens (3, 4; 32, 33, 34) mit einer Aufnahmefläche (6, 8; 35, 36, 39) eines anderen Detektorstreifens (2, 3; 32, 33, 34) überlappt.

3. Detektoranordnung nach Anspruch 1 oder 2, **dadurch gekennzeichnet, daß** die Detektoren (7, 9) in zwei Detektorstreifen (3, 4) angeordnet sind und daß die Aufnahmeflächen (8) des einen Detektorstreifens (4) etwa rechtwinklig und die Aufnahmeflächen (6) des anderen Detektorstreifens (3) etwa parallel zur Einfallsrichtung (2) des Bildstreifens ausgerichtet sind.

4. Detektoranordnung nach Anspruch 3, **gekennzeichnet durch** einen im Strahlengang vor den Aufnahmeflächen (6, 8) angeordneten und schräg zur Einfallsrichtung (2) des Bildstreifens ausgerichteten Trägerstreifen (10), der in Richtung (5) der Detektorstreifen (3, 4) abwechselnd Spiegelflächen (11) und transparente Flächen (12) für den einfallenden Bildstreifen aufweist.

5. Detektoranordnung nach Anspruch 1 oder 2, **dadurch gekennzeichnet, daß** auf zwei bezüglich des einfallenden Bildstreifens einander gegenüberliegenden Seiten jeweils ein Detektorstreifen (32, 33) mit schräg oder parallel zur Einfallsrichtung (2) des Bildstreifens ausgerichteten Aufnahmeflächen (35, 36) angeordnet ist.

6. Detektoranordnung nach Anspruch 5, **dadurch gekennzeichnet, daß** zwischen den beiden Detektorstreifen (32, 33) ein weiterer Detektorstreifen (34) mit etwa rechtwinklig zur Einfallsrichtung (2) des Bildstreifens ausgerichteten Aufnahmeflächen (39) angeordnet ist.

7. Detektoranordnung nach Anspruch 6, **dadurch gekennzeichnet, daß** in der Richtung (31) der Detektorstreifen (32, 33, 34) zwischen zwei Aufnahmeflächen eines Detektorstreifens jeweils eine Aufnahmefläche der beiden anderen Detektorstreifen angeordnet ist.

8. Kamera (50) mit mindestens einer Detektoranordnung (1; 20; 30) nach einem der vorhergehenden Ansprüche.

9. Kamera nach Anspruch 8, **gekennzeichnet durch** mehrere Detektoranordnungen (1; 20; 30) und mindestens einen geometrischen Strahlteiler (52), der ein einfallendes Bild auf die Detektoranordnungen (1; 20; 30) als Teilbildstreifen aufteilt.

10. Kamera nach Anspruch 9, **dadurch gekennzeichnet, daß** der Strahlteiler (52) als ein Spiegel mit mehreren aneinander angrenzenden Spiegelstreifen (54, 55) ausgebildet ist, die jeweils in unterschiedlichen Winkeln zur Einfallsrichtung (53) des einfallenden Bildes ausgerichtet sind, und daß sich die einzelnen Detektorstreifen der Detektoranordnungen (1; 20; 30) und die Spiegelstreifen (54, 55, 56, 57) in der gleichen Richtung erstrecken.

11. Verfahren zur Bildwanderungskompensation für eine Kamera (50) nach einem der Ansprüche 8 bis 10, **dadurch gekennzeichnet, daß** die Bildwanderungskompensation in jeder Aufnahmefläche (6, 8; 35, 36, 39) der Detektoranordnungen (1; 20; 30) elektronisch jeweils so gesteuert wird, daß sie im Mittel der lokalen Bildwanderung der jeweiligen Aufnahmefläche (6, 8; 35, 36, 39) zumindest näherungsweise entspricht.
